# EUROPÄISCHE PATENTSCHRIFT

(11) **EP 0 472 910 B1**
(45) Veröffentlichungstag und Bekanntmachung des Hinweises auf die Patenterteilung: **17.08.1994**
(21) Anmeldenummer: 91112475.8
(22) Anmeldetag: 25.07.1991
(51) Int. Cl.: F16K 11/07, F16J 15/32

(54) **Ringförmige Dichtungsanordnung und damit ausgestattetes Ventil**
Seal ring and valve with such a seal
Bague d'étanchéité et vanne munie d'une telle bague

(30) Priorität: 31.08.1990 DE 4027520
(43) Veröffentlichungstag der Anmeldung: 04.03.1992
(73) Patentinhaber: Festo KG, D-73734 Esslingen (DE)
(72) Erfinder: Stoll, Kurt, Dipl.-Ing., W-7300 Esslingen (DE); Rüdle, Manfred, Dipl.-Ing., W-7300 Esslingen (DE)
(74) Vertreter: Magenbauer, Rudolf, Dipl.-Ing.

(56) Entgegenhaltungen:
- DE-A- 3 408 182
- FR-A- 2 314 411
- US-A- 2 191 873
- US-A- 3 951 166

## Beschreibung

Die Erfindung betrifft eine ringförmige Dichtungsanordnung zur Abdichtung zwischen ineinander angeordneten, in axialer Richtung relativ zueinander bewegbaren Teilen, vorzugsweise zur Abdichtung des Ventilkolbens gegenüber dem Ventilgehäuse bei Mehrwegeventilen, mit einem Dichtungsgehäuse, das aus mehreren in axialer Richtung zusammengesetzten Ringteilen besteht, die eine Ringvertiefung begrenzen, in der in zueinander konzentrischer Anordnung ein elastisch nachgiebiger Innenring und ein diesem im Bereich der radial orientierten Vertiefungsöffnung vorgelagerter Außenring gehalten ist, wobei im entfernten Zustand eines der Ringteile am verbleibenden Abschnitt des Dichtungsgehäuses eine das axiale Einsetzen von Innen- und Außenring ermöglichende, axial orientierte Einsetzöffnung vorhanden ist, und wobei das Dichtungsgehäuse am einen der abzudichtenden Teile derart festlegbar ist, daß der Außenring als mit dem anderen Teil zusammenarbeitendes Dichtelement wirkt.

Aus der FR-A-2314 411 geht ein Ventil hervor, das mit mehreren Dichtungsanordnungen der eingangs genannten Art ausgestattet ist. Die einzelnen Ringteile einer jeweiligen Dichtungsanordnung sind lose Teile, die erst im am Ventilgehäuse montierten Zustand eine feste Zuordnung zueinander einnehmen. Die Montage ist daher relativ umständlich. Zur Abdichtung gegenüber demjenigen Teil, an dem eine jeweilige Dichtungsanordnung festgelegt ist, ist ein zusätzliches ringförmiges Dichtelement vorgesehen, was besondere Anforderungen an die Konstruktion der Dichtungsanordnung stellt und den Aufbau verteuert.

Es ist die Aufgabe der vorliegenden Erfindung, eine Dichtungsanordnung zu schaffen, die bei einfacherem Aufbau eine vereinfachte Montage ermöglicht. Desweiteren soll ein mit einer solchen Dichtungsanordnung ausgestattetes und einen einfachen Aufbau aufweisendes Mehrwegeventil geschaffen werden.

Zur Lösung der Aufgabe ist bei einer ringförmigen Dichtungsanordnung der eingangs genannten Art vorgesehen, daß das aus den Ringteilen zusammengesetzte Dichtungsgehäuse einen im wesentlichen U-förmigen Querschnitt aufweist, daß die Ringteile unter gegenseitiger axialer Überlappung ineinandergesteckt und unlösbar fest miteinander verbunden sind, so daß das Dichtungsgehäuse mit dem Innen- und Außenring einen einheitlich handhabbaren Dichtungsring bildet, und daß die der Vertiefungsöffnung radial entgegengesetzte Außenfläche des Dichtungsgehäuses als zur Preßsitzbefestigung an dem einen der abzudichtenden Teile dienende dichtelementlose Preßsitzfläche ausgebildet ist.

Bei einem Mehrwegeventil bevorzugter Ausgestaltung, das mit einer Mehrzahl derartiger Dichtungsanordnungen ausgestattet ist, sind die als einzelne Dichtungsringe ausgebildeten Dichtungsanordnungen untereinander axial beabstandet mit ihrer Preßsitzfläche dichtelementlos im Preßsitz in der Kolbenaufnahme des Ventilgehäuses oder auf dem Ventilkolben festgelegt.

Auf diese Weise stellt eine jeweilige Dichtungsanordnung einen einheitlich handhabbaren Dichtungsring dar, der sich als eigenständiges Bauteil herstellen und als Ganzes am Einsatzort installieren läßt. Der Aufbau der Dichtungsanordnung ist robotergerecht, was einen automatisierten Zusammenbau ermöglicht. Je nachdem, ob die Vertiefungsöffnung nach radial innen oder nach radial außen orientiert ist, liegt ein innendichtender oder außendichtender Dichtungsring vor. Infolge der axialen Überlappung der fest zusammengefügten Ringteile ergibt sich ein besonders stabiler Aufbau. Der Dichtungsring kann über seine Preßsitzfläche ohne zusätzlichen Dichtring an dem ihn tragenden Bauteil festgelegt werden. Das Dichtungsgehäuse bildet praktisch einen Käfig, der aus Metall bestehen kann und bei Bedarf, z.B. zur Materialeinsparung, einzelne Durchbrechungen in der Gehäusewand aufweisen kann. Mit Hilfe der erfindungsgemäßen Dichtungsanordnung lassen sich kostengünstige Mehrwegeventile herstellen, bei denen eine jeweilige Dichtungsanordnung im Preßsitz in der Kolbenaufnahme des Ventilgehäuses oder auf dem Ventilkolben festgelegt ist.

Bei einem solchen Mehrwegeventil genügt es beispielsweise, im Ventilgehäuse eine Kolbenaufnahme nach Art einer zylindrischen Bohrung vorzusehen, die keinerlei nutartige Vertiefungen zur Aufnahme einer Dichtungsanordnung benötigt. Die erfindungsgemäßen Dichtungsringe sind lediglich bis an die gewünschte Axialposition einzustecken und einzupressen. Auf diese Weise können Mehrwegeventile verschiedenster Typen praktisch modular hergestellt werden, indem man lediglich die Ventilgehäuselänge variiert und dann die erforderliche Anzahl von Dichtungsringen axial beabstandet in die kreiszylindrische Kolbenaufnahme einsetzt. Der Preßsitz zwischen dem Dichtungsgehäuse und dem den Dichtungsring haltenden Teil hat dabei ebenfalls eine Dichtfunktion, so daß in diesem Bereich auf zusätzliche Dichtelemente verzichtet werden kann. In entsprechender Weise ist auch eine Montage auf einem z.B. zylindrischen Ventilkolben möglich.

Aus der DE-A-34 08 182 geht zwar schon ein Mehrwegeventil hervor, bei dem die axial aufeinanderfolgend angeordneten Dichtungsanordnungen nach Art einheitlich handhabbarer Dichtungsringe ausgebildet sind. Die Dichtungsgehäuse dieser Dichtungsringe sind allerdings einstückig ausgebildet, so daß die zugeordneten Dichtringe mühsam eingeknüpft werden müssen, was den Zusammenbau erschwert. Überdies sind im Kontaktbereich zwischen einem jeweiligen Dichtungsgehäuse und dem Ventilgehäuse zusätzliche Dichtelemente vorgesehen, die beim Einschieben der Dichtungsringe in die Gehäusebohrung des Ventilgehäuses beschädigt werden können.

Eine Preßsitzbefestigung von Dichtungsanordnungen in einem Ventilgehäuse, bei dem auf zusätzliche ringförmige Dichtelemente verzichtet wird, geht zwar aus der DE-A-34 20 127 hervor. Auch dort handelt es sich jedoch nicht um einheitlich handhabbare Dichtungsringe, da sich die betreffenden Ringteile erst im eingebauten Zustand in der erforderlichen Zuordnung befinden.

Weitere Vorteile und Anwendungsfälle der Erfindung ergeben sich aus der nachfolgenden Beschreibung unter Bezugnahme auf die beigefügte Zeichnung. In dieser zeigen:
- Figur 1: den schematischen Aufbau einer ersten Variante eines Ventils, das mit mehreren der erfindungsgemäßen Dichtungsringe ausgestattet ist, im Längsschnitt, wobei oberhalb und unterhalb der Symmetrielinie zwei unterschiedliche Schaltstellungen des Ventilkolbens bzw. Kolbenschiebers dargestellt sind,
- Figur 2: den vergrößerten Ausschnitt II aus Figur 1 mit einem Querschnitt durch einen Dichtungsring, der in einer sich axial und radial erstreckenden Ebene des Dichtungsringes verläuft,
- Figur 3: eine weitere Ausführungsform eines Dichtungsringes in einer der Figur 2 entsprechenden Darstel lungsform,
- Fig. 4: das Ausführungsbeispiel eines Dichtungsringes mit einer vorteilhaften Möglichkeit zur Halterung des Außenringes, ebenfalls in einer der Figur 2 entsprechenden Darstellungsweise,
- Fig. 5: ein weiteres Ausführungsbeispiel eines Dichtungsringes im Querschnitt analog den Figuren 2 bis 4.

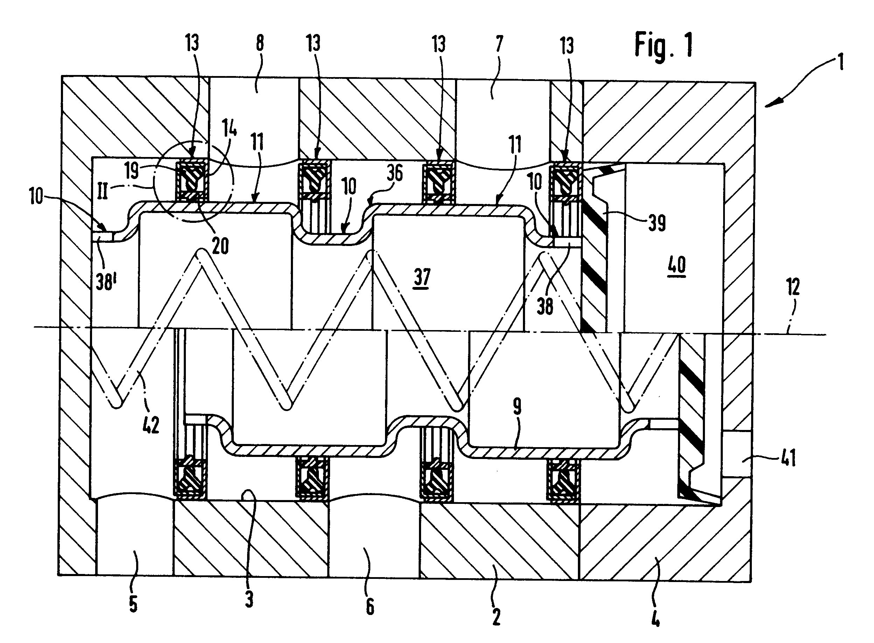

In Figur 1 ist ein allgemein mit 1 bezeichnetes Mehrwegeventil abgebildet, das als 4/2-Wegeventil ausgestaltet ist und über ein Gehäuse 2 mit im Innern vorgesehener Kolbenaufnahme 3 verfügt. Letztere ist nach Art einer Bohrung gestaltet und hat beim Ausführungsbeispiel eine exakt kreiszylindrische Kontur. Zugänglich ist sie von einer Axialseite her, indem wenigstens ein stirnseitiger Endabschnitt des Ventilgehäuses 2 als fest angebrachter abnehmbarer Ventildeckel 4 ausgebildet ist.

Seitlich am Umfang münden mehrere Ventilkanäle 5, 6, 7, 8 in die Kolbenaufnahme 3 ein. An sie sind außen in üblicher Weise eine Druckluftquelle (bei 6) und Verbraucher (bei 7 und 8) anschließbar, ein weiterer Ventilkanal 5 dient zur Abluftabführung.

Ein in der Kolbenaufnahme 3 angeordneter, oft auch als Kolbenschieber oder Ventilschieber bezeichneter Ventilkolben 9 ist axial verstellbar, wobei er beim Ausführungsbeispiel zwei in der oberen und unteren Bildhälfte illustrierte Endstellungen einnehmen kann. Sein Außenumfang ist in Längsrichtung konturiert und besitzt mehrere in Längsrichtung 12 axial abwechselnd aufeinanderfolgende umlaufende Vertiefungen 10 und Erhebungen bzw. Vorsprünge 11. Dadurch werden auf an sich bekannte Weise in den beiden Kolbenendstellungen verschiedene der vorhandenen Ventilkanäle fluidisch miteinander verbunden, während andere voneinander abgetrennt werden.

Zur Abdichtung zwischen dem Ventilgehäuse 2, d. h. der Wand der Kolbenaufnahme 3 und dem Ventilkolben 9 sind mehrere, in Axialrichtung beabstandet aufeinanderfolgend angeordnete Dichtungsringe 13 in der Kolbenaufnahme 3 koaxial festgelegt. Diese Dichtungsringe, die auch in allen anderen Fällen immer dann eingesetzt werden können, wenn insbesondere konzentrisch ineinander angeordnete und relativ zueinander bewegbare Teile gegeneinander abgedichtet werden sollen, werden nachfolgend anhand verschiedener Ausführungsbeispiele näher beschrieben. Der Einsatz ist zwar nicht auf den Ventilsektor mit in axialer Richtung 12 relativ zueinander bewegbaren Teilen beschränkt, dennoch treten dort die Vorteile am besten zutage, so daß die Beschreibung anhand einer besonders vorteilhaften Ausgestaltung eines Ventils 1 erfolgt. Es versteht sich, daß die Anzahl der pro Ventil verwendeten Dichtungsringe 13 dem Bedarf angepaßt ist, unter Umständen genügt bereits ein einziger solcher Dichtungsring 13.

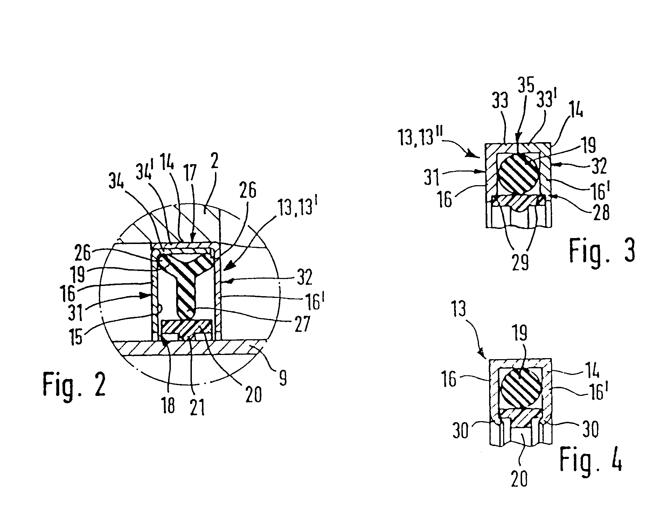

Der in Figur 1 beispielhaft verwendete Dichtungsring 13 ist in Figur 2 bei 13′ im Querschnitt an einer Stelle des Ringumfanges dargestellt. Die Querschnittsebene verläuft rechtwinkelig zur Ringebene, die im eingebauten Zustand senkrecht zur Längsrichtung 12 verläuft.

Der Dichtungsring 13, 13′ besitzt ein Dichtungsgehäuse 14, das ringförmig ausgebildet ist und im Querschnitt eine im wesentlichen U-förmige Gestalt besitzt. Somit verfügt das Dichtungsgehäuse 14 über eine ringförmig umlaufende Ringvertiefung 15, die an drei Seiten von den den U-Schenkeln entsprechenden beiden Ringpartien 16, 16′ und der dem U-Quersteg entsprechenden Ringpartie 17 begrenzt wird, während sie an einer radial orientierten Vertiefungsöffnung 18 offen ist. Im Innern der Ringvertiefung 15 befindet sich ein elastisch nachgiebiger Innenring 19, der sich zweckmäßigerweise an der dem Vertiefungsgrund zugeordneten Ringpartie 17 abstützt. Ihm ist zur Seite der Vertiefungsöffnung 18 hin ein konzentrisch angeordneter und als Dichtelement dienender Außenring 20 lose, d. h. lediglich berührend und nicht fest verbunden, vorgelagert. Beide Ringe 19, 20 sind vom Dichtungsgehäuse 14 gehalten und bilden zusammen mit diesem den einheitlich handhabbaren Dichtungsring 13, 13′.

Über das einerseits die beiden Ringe 19, 20 haltende Dichtungsgehäuse 14 läßt sich ein jeweiliger Dichtungsring 13 am jeweils einen der relativ zueinander bewegbaren und gegeneinander abzudichtenden Teile festlegen. Im Falle eines Ventils 1 erfolgt die Festlegung zweckmäßigerweise gehäuseseits wie abgebildet wobei ein innendichtender Dichtungsring 13, 13′ mit radial nach innen weisender Vertiefungsöffnung 13 verwendet wird. Im festgelegten Zustand kann das Dichtungsgehäuse 14 axial auf wenigstens einer oder auf beiden Seiten von einem Haltemittel flankiert bzw. gehalten sein. Vorzugsweise erfolgt die Festlegung allerdings im Rahmen eines Preßsitzes, wie dies beim Ausführungsbeispiel gemäß Figuren 1 und 2 der Fall ist. Hier sind die einzelnen Dichtungsringe 13, 13′ mit dem Dichtungsgehäuse 14 in die Kolbenaufnahme 3 eingepreßt, wobei das Dichtungsgehäuse 14 mit der dem U-Quersteg entsprechenden, radial außen angeordneten zylindrischen Ringpartie 17 an der Innenoberfläche der Kolbenaufnahme 3 festliegt.

Die Montage erfolgt zweckmäßigerweise von einer Gehäuse-Axialseite her, beim Ausführungsbeispiel, indem zuvor der Ventildeckel 4 entfernt wird, wonach die Kolbenaufnahme 3 von der entsprechenden Axialseite her zugänglich ist. Anschließend wird die entsprechende Anzahl von Dichtungsringen 13, 13′ manuell oder insbesondere maschinell nacheinander eingesetzt, derart, daß bei mehreren Dichtungsringen 13 diese axial beabstandet in der Kolbenaufnahme 3 zu liegen kommen. Die Anordnung erfolgt zweckmäßigerweise derart, daß ein jeweiliger Ventilkanal (5 bis 8) auf beiden Axialseiten von jeweils einem Dichtungsring 13 flankiert wird, wobei bei einem axial zuäußerst liegenden Ventilkanal 5 an der axialen Außenseite eventuell auf einen Dichtungsring 13 verzichtet werden kann, wie das die Figur 1 vermittelt. Im festgelegten Zustand stellen die Dichtungsringe 13 axial aufeinanderfolgende umlaufende Radialvorsprünge innerhalb der Kolbenaufnahme 3 dar, wobei axial jeweils benachbarte Dichtungsringe 13 einen Fluidraum begrenzen, der je nach Stellung des Ventilkolbens 9 mit einem benachbarten Fluidraum verbindbar oder von einem solchen abgetrennt ist.

Der jeweilige Außenring 20 arbeitet mit demjenigen der beiden relativ zueinander bewegbaren Teile zusammen, an dem der Dichtungsring 13, 13′ nicht festgelegt ist, beim Ausführungsbeispiel also mit dem Venitlkolben 9. Der Außenring 20 dient folglich als Dichtelement, das den Ventilkolben 9 konzentrisch umschließt und in Gleitkontakt zu letzterem steht. Er besteht daher vorzugsweise aus einem halbharten Kunststoff, zum Beispiel Teflon oder einem anderen Polymer, das bei guten Gleiteigenschaften zusätzliche Dichteigenschaften besitzt. Gegenüber Gummi hat dieses Material den Vorteil, daß ein Anhaften nach einer Betriebspause verhindert wird, eine nur geringe Reibung auftritt und damit bei geringem Verschleiß eine hohe Schaltgeschwindigkeit bei langer Lebensdauer erreicht werden kann. Vorzugsweise dient der Außenring 20 auch gleichzeitig als Gleitring oder Führungsring, der den Ventilkolben 9 zentrierend in seiner Lage hält.

Um vor allem die Dichteigenschaften zu optimieren, kann am Außenring 20 an der dem Innenring 19 entgegengesetzten und dem relativ bewegbaren Teil zugewandten Seite wenigstens ein umlaufender rippenförmiger Radialvorsprung vorgesehen sein. Der Außenring 20 ist bei allen dargestellten Ausführungsbeispielen mit genau einem solchen Radialvorsprung 21 ausgestattet, der einstückig angeformt und zur Vermeidung eines Kippeffektes axial mittig angeordnet ist. Er bewirkt vorzugsweise einen scharfen Dichteffekt.

Damit eine Anpassung an die Außenkontur oder Lage des Ventilkolbens 9, d. h. ein Toleranzausgleich möglich ist, ist es von Vorteil, wenn der Außenring 20 gegenüber dem Dichtungsgehäuse 14 in Radialrichtung mit Bezug zur Längsrichtung 12 insbesondere frei bewegbar ist. Hierzu ist der Außenring 20 zweckmäßigerweise in Umfangsrichtung mit Bezug zur Längsachse 12 zumindest geringfügig elastisch verformbar, so daß er sich bei Bedarf etwas aufweiten kann. Eine Vorspannung ist allerdings nicht unbedingt erforderlich, da der Innenring 19 einen Federring bildet, der sich zweckmäßigerweise einerseits am Dichtungsgehäuse 14 abstützt und andererseits in Radialrichtung auf den Außenring 20 einwirkt. Die federelastischen Eigenschaften des Innenrings 19 ergeben sich zum Beispiel durch dessen konstruktive Gestaltung und/oder insbesondere durch seine Materialwahl. Bei den Ausführungsbeispielen besteht er aus Material mit gummielastischen Eigenschaften, und ist zweckmäßigerweise als Gummiring ausgebildet. Um die Bewegbarkeit nicht unnötig einzuschränken und um die Materialien der beiden Ringe 20, 21 unabhängig voneinander den jeweiligen Bedürfnissen anpassen zu können, sind die beiden Ringe 19, 20 zweckmäßigerweise als Einzelringe ausgestaltet und liegen ohne feste Verbindung berührend in Radialrichtung an einander an.

Der Innenring 19 bildet vorzugsweise ebenfalls ein Dichtelement, das zwischen dem Außenring 20 und dem Dichtungsgehäuse 14 abdichtet, so daß der Außenring 20 an der dem Innern des Dichtungsgehäuses 14 zugewandten Seite nicht von Fluid umströmt werden kann.

Der in Figur 2 vergrößert dargestellte Innenring 19 übt gerade auch wegen seiner konstruktiven Ausgestaltung einen federelastischen Einfluß auf den Außenring 20 aus. Er hat im Querschnitt gemäß Figur 2 gesehen in etwa die Gestalt eines Y, dessen Oberseite, d. h. dessen beiden den Y-Ästen entsprechenden Ringabschnitte 26 dem Vertiefungsgrund zugewandt sind. Sie stützen sich von innen her radial an der Ringpartie 17 ab, wobei sie gleichzeitig auch axial von innen gegen die seitlichen Ringpartien 16, 16′ arbeiten können. Die Unterseite des Y, d. h. der der Y-Basis entsprechende Ringabschnitt 27 ist dem Außenring 20 zugewandt und arbeitet mit dem freien Ende gegen die zugewandte Radialseite desselben, insbesondere axial mittig und dabei zweckmäßigerweise in der gleichen Radialebene wie der Radialvorsprung 21.

Jeder der drei Ringabschnitte 26, 27 hat dabei zweckmäßigerweise eine abdichtende Wirkung, die noch dadurch verstärkt werden kann, daß axial seitlich am Außenring 20 vorbei Druckmittel aus der Kolbenaufnahme 3 in die Ringvertiefung 15 eintreten und einen Dichtungsdruck auf den Innenring 19 ausüben kann. Dieser Druck kann eventuell zusätzlich eine Anpreßkraft auf den Außenring 20 ausüben.

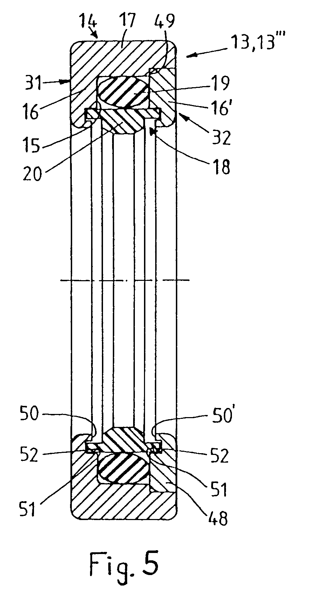

Bei den Ausführungsbeispielen der Figuren 3,4 und 5, bei denen übrigens entsprechende Bauteile mit identischen Bezugszeichen belegt worden sind, ist der Innenring 19 als üblicher O-Ring aus zum Beispiel Gummimaterial ausgebildet,der zumindest im eingebau ten Zustand auch einen elliptischen Querschnitt haben kann (Fig. 5). Vorzugsweise ist der Außenring 20 unverlierbar am Dichtungsgehäuse gehalten. Dies erfolgt zum Beispiel bei den Ausführungsbeispielen der Figuren 2 und 3 dadurch, daß er wenigstens teilweise in der Ringvertiefung 15 versenkt zu liegen kommt, so daß seine axialen Randbereiche zumindest teilweise von den beiden Ringpartien 16 16′ flankiert werden. Allein aufgrund seiner Ringgestalt ist der Außenring 20 dadurch am Herausfallen gehindert. Beim Ausführungsbeispiel gemäß Figur 3 ist zudem vorgesehen, daß auf der dem Innenring 19 zugewandten Seite des Außenrings 20 am Dichtungsgehäuse 14 ein Radialbewegungsanschlag 28 für den Außenring 20 vorgesehen ist. Er ist gebildet von jeweils einer umlaufenden Schulter 29 an den radial gerichteten Bereichen der die Vertiefungsöffnung 18 flankierenden Ringpartien 16, 16′. Auf diese Weise ist der Außenring 20 in seiner Lage besonders stabilisiert.

Einen besonders zuverlässigen Halt für den Außenring 20 ergibt sich, wenn letzterer wie beim Ausführungsbeispielgemäß Fig. 4 und 5 auf seiner dem Innenring 19 abgewandten Seite von Randpartien des Dichtungsgehäuses 14 hintergriffen bzw. teilweise umgriffen wird. Dies wird beispielsweise gemäß Fig.4 dadurch verwirklicht, daß man die Ringpartien 16, 16′ im Bereich ihres jeweiligen radial gerichteten Randes in Richtung zum Außenring 20 umbiegt oder umbördelt. Auf diese Weise kommt der Außenring 20 mit seinen beiden axialen Randbereichen zwischen den umgebogenen Haltepartien 30 und dem Innenring zu liegen und es ergibt sich vorzugsweise eine elastische Einspannung. Die Haltepartien 30 können sich über den gesamten Ringumfang erstrecken, es kann sich aber auch um einzelne, in Umfangsrichtung des Ringes beabstandet angeordnete umgelegte Randabschnitte handeln.

Es versteht sich, daß die einzelnen, bei verschiedenen Ausführungsbeispielen der Dichtungsringe dargestellten Konstruktionsvarianten nicht auf den jeweiligen Typ von Dichtungsring festgelegt sind sondern ausgetauscht werden können.

Während beim Ausführungsbeispiel gemäß Figur 4 das Dichtungsgehäuse 14 einstückig ist, so daß die beiden Ringe 19, 20 zur Montage eingeknüpft werden oder das Gehäuse bei der Fertigung um die entsprechend angeordneten Ringe 19, 20 herumgebogen wird, besteht das Dichtungsgehäuse 14 der übrigen Ausführungsbeispiele vorteilhafterweise aus mehreren Teilen und ist zweckmäßigerweise zweiteilig ausgeführt. Bezugnehmend auf die Figuren 2,3 und 5 bestehen die Dichtungsringe 13 aus zwei fest miteinander verbundenen, koaxial zueinander angeordneten Ringteilen 31, 32, derart, daß im unverbundenen Zustand, d. h. bei voneinander getrennten Ringteilen 31, 32 vor der Montage eine axial orientierte ringförmige Einsetzöffnung für Innen- und Außenrig 19, 20 zur Verfügung steht. Man wird also zunächst die beiden Ringteile 31, 32 separat fertigen, sodann vor dem Zusammenbau die beiden Ringe 19, 20 in eines der Ringteile 31, 32 axial einlegen, wonach man bei gleichzeitigem Verschließen der Einsetzöffnung das zweite Ringteil anbringt. Dies hat den Vorteil, daß die Ringe 19, 20 bei der Montage weder gestaucht noch gedehnt werden müssen, so daß sie ohne Gefahr der Beschädigung sehr leicht maschinell eingesetzt und der gesamte Dichtring roboterunterstützt montiert werden kann.

Besonders vorteilhaft ist es, wenn die beiden Ringteile 31, 32 wie bei den Figuren 2 und 3 im Querschnitt jeweils L-förmig ausgestaltet und derart miteinander verbunden sind, daß sich im Querschnitt gesehen die U-förmige Gehäusegestalt ergibt. Beim Dichtungsring 13, 13˝ der Figur 3 sind die beiden Ringteile 31, 32 axial aufeinanderfolgend derart angeordnet, daß zwei L-Schenkel aufeinander zuweisen und die beiden anderen L-Schenkel radial ausgerichtet sind. Die beiden einander zugewandten L-Schenkel sind mit den zugeordneten umlaufenden Ringpartien 33, 33′ zweckmäßigerweise stumpf aneinander gestoßen und im Stoßbereich 35 unlösbar fest miteinander verbunden. Beim Ausführungsbeispiel ist eine Klebeverbindung vorgesehen, auch eine Schweißverbindung ist beispielsweise möglich.

Der Dichtungsring 13, 13′ der Figur 2 hat ein noch stabileres Dichtungsgehäuse 14, weil die beiden Ringteile 31, 32 derart angeordnet sind, daß sie sich mit denjenigen Partien 34, 34′, die den axial gerichteten L-Schenkeln entsprechen, axial überlappen. Die Ringpartie 17 des Dichtungsringes 13, 13′ wird in diesem Falle von zwei sich überlappenden Partien 34, 34′ der beiden im Querschnitt L-förmigen Ringteile 31, 32 gebildet. Auch hier können die beiden Ringteile 31, 32 mittels einer Fügeverbindung fest aneinander fixiert sein. Von Vorteil ist jedoch, wenn die beiden Ringteile 31, 32 ineinander eingepreßt sind, derart, daß im Bereich der sich überlappenden Partien 34, 34′ ein im Normalfall unlösbarer Preßsitz vorliegt.

Beim Ausführungsbeispiel gemäß Figur 2 besteht also jedes Ringteil 31, 32 aus einer der Ringpartie 16, 16′ entsprechenden ebenen Ringscheibe, an deren äußeren Rand sich die insgesamt zylindrische Partie 34, 34′ koaxial einstückig anschließt, wobei der Außendurchmesser der einen Ringpartie 34 auf den Innendurchmesser der anderen Ringpartie 34′ derart abgestimmt ist, daß sich beide Ringteile mit dem freien Randbereich der zylindrischen Ringpartien 34, 34′ voraus einander überlappend aufeinander steckbar sind. Diese Montage läßt sich besonders einfach mittels Robotern realisieren.

Mit dem erfindungsgemäßen Dichtungsring lassen sich vorteilhaft Ventile unterschiedlicher Länge und Wegeanordnung realisieren. Beispielsweise kann man ein später dem Ventilgehäuse entsprechendes Rohrteil auf die gewünschte Länge ablängen und dann die erforderliche Anzahl von Dichtungsringen einsetzen. In diesem Falle wird man die Kolbenaufnahme 3 zweckmäßigerweise beidseits mit separaten Deckeln verschließen. Besonders vorteilhaft im Zusammenhang mit einem die erfindungsgemäßen Dichtungsringe 13 enthaltenden Ventil 1 ist die Verwendung eines Ventilkolbens 9, der als einstückiges hohles und im Rahmen einer spanlosen Bearbeitung konturiertes hülsenförmiges Formteil ausgebildet ist, das am Außenumfang wenigstens eine umlaufende Vertiefung 10 aufweist. Ein solcher Ventilkolben 9 ist in Figur 1 abgebildet. Durch die spanlose Formung ist es möglich, die Außenflächen der Erhebungen 11, die beim Schalten des Ventils 1 an den Außenringen 20 entlanggleiten, besonders exakt plan zu bearbeiten, ebenso auch die ringförmigen Übergangsbereiche 36 hin zu den Vertiefungen 10. Die Übergangsbereiche 36 erhalten zweckmäßigerweise eine Abrundung, so daß ein jeweiliger Außenring 20 nicht beschädigt wird, wenn er im Rahmen der Kolbenbewegung aus einer zunächst den Ventilkolben 9 nicht berührenden, im Bereich einer Vertiefung 10 angeordneten Position unter Passieren eines Übergangsbereiches 36 in dichtenden Berührkontakt mit der Außenfläche einer Erhebung 10 gelangt.

Der hohle, spanlos geformte Ventilkolben 9 ist extrem leicht, besteht zum Beispiel aus dünnwandigem Aluminium oder nichtrostendem Stahl und ermöglicht wegen der geringen zu beschleunigenden Massen bei kostengünstiger Herstellung eine hohe Schaltfrequenz. Zwar ist ein derartiger Ventilkolben 9 bei praktisch jedem Ventiltyp einsetzbar, im Zusammenhang mit einem die erfindungsgemäßen Dichtungsringe 13 aufweisenden Ventil 1 ergeben sich jedoch besondere Vorteile, da insgesamt eine kostengünstige Bauweise möglich ist. Die Dichtungsringe 13 selbst sind ja praktisch patronenartig aufgebaut, indem der als Dichtring fungierende Außenring 20 im Dichtungsgehäuse 14 bzw. Käfig lose auf dem Federring liegt.

Der Kolbenhohlraum 37 im Innern des Ventilkolbens 9 läßt sich zudem im Rahmen der Ventilfunktion nutzen. Beim Ausführungsbeispiel dient der Kolbenhohlraum 37 als Strömungskanal für Ventilfluid, zum Beispiel zur Abluftführung. In der in Figur 1 oben abgebildeten linken Schaltstellung des Ventilkolbens 9 kommuniziert der zu einem Verbraucher führende Ventilkanal 7 über eine Durchbrechung 38 in der Kolbenwand mit dem Kolbenhohlraum 37, der über eine weitere Durchbrechung 38′ am entgegengesetzten Kolbenende mit dem Entlüftungs-Ventilkanal 5 in Verbindung steht. In der unten abgebildeten rechten Endstellung ist die Verbindung zwischen Ventilkanal 7 und Kolbenhohlraum 37 unterbrochen und stattdessen erlaubt der Ventilkolben 9 eine Verbindung zwischen dem ebenfalls zu einem Verbraucher führenden Ventilkanal 8 und dem Entlüftungs-Ventilkanal 5. Es versteht sich, daß bei geeigneter Ausbildung auf Durchbrechungen 38, 38′ verzichtet werden kann, indem das Ventilfluid direkt stirnseitig in den Kolbenhohlraum 37 ein- bzw. austreten kann. Beim Ausführungsbeispiel ist die dem Ventilkanal 7 zugeordnete Durchbrechung 38 erforderlich, weil der Ventilkolben 9 an der rechten Stirnseite durch einen Betätigungskolben 39 verschlossen ist, der in einem an die Kolbenaufnahme 3 axial anschließenden Arbeitsraum 40 bewegbar ist, der mit einer Steuerleitung 41 auf an sich bekannte Weise kommuniziert.

Der Kolbenhohlraum 37 eignet sich auch zur Aufnahme einer in Figur 1 lediglich strichpunktiert angedeuteten Ventilkolben-Rückstellfeder 42, die man verwendet, wenn über den Betätigungskolben 39 lediglich eine einfach wirkende Betätigung möglich ist.

Das abgebildete sogenannte Patronenventil verzichtet auf dynamische Weichteile, d. h. die im Gleitkontakt stehenden Teile sind relativ hart und damit schmierungsfrei. Eine problemlose Robotermontage ist möglich, die Dichtungsringe sind ohne in Vertiefungen oder dergleichen eingebracht werden zu müssen problemlos in die Kolbenaufnahme einschiebbar. Es ergibt sich ein modularer Aufbau, mit dem sich zum Beispiel 5/2- oder 5/3- oder 3/2- oder 4/2-Wegeventile verwirklichen lassen. Durch die halbharten Eigenschaften des Außenringes 20 ergibt sich eine gute Dichtleistung bei geringer Reibung. Gegenüber einer Kombination "hart auf hart" ist die Leckage erheblich reduziert. Die bei Verwirklichung eines Radialvorsprunges 21 erhaltene Linienberührung hat gegenüber einer Flächendichtung den Vorteil, daß auch nach längerer Betriebspause ein Anhaften und Beschädigen der Dichtung verhindert wird. Das Ventilgehäuse wird zweckmäßigerweise spanlos aus Aluminium oder aus einem harten Polymer gefertigt. Auch das Dichtungsgehäuse besteht zweckmäßigerweise aus einem relativ harten Material wie Metall oder Hartkunststoff. Die Verwendung eines Hohlkolbens gestattet wegen der Möglichkeit der Ausnutzung seines Innenraumes als Strömungskanal eine kurze Axialbauweise. Der Dichtungsring ist auch unter sehr hohen Drücken von zum Beispiel bis zu 16 bar zuverlässig dicht und kann eventuell auch für Hydraulik eingesetzt werden. Bevorzugtes Einsatzgebiet ist allerdings die Pneumatik.

Bei dem in Figur 5 abgebildeten Dichtungsring 13, 13‴ ist das erste Ringteil 31 wiederum im Querschnitt L-förmig ausgebildet, wohingegen das zweite Ringteil 32 von einer Ringscheibe 48 gebildet ist. Im zusammengebauten Zustand bildet die Ringscheibe 48 die dem einen U-Schenkel entsprechende Ringpartie 16′, während das erste Ringteil 32 die beiden anderen Ringpartien 16, 17 bildet. Bevorzugt sitzt die Ringscheibe 48 radial innerhalb der zylindrischen Ringpartie 17 auf deren freiem, der ersten Ringpartie 16 axial entgegengesetzten Endabschnitt. Sie ist z.B. eingepreßt, wobei die Einpreßtiefe von einem insbesondere umlaufenden Radialvorsprung 49 der mittleren Ringpartie 17 vorgegeben sein kann.

Man könnte sich auch ein dreiteiliges Dichtungsgehäuse vorstellen, bei dem jede der Ringpartien 16, 16′, 17 separat ausgebildet ist.

Die Ringscheibe 48 kann auch mit radial schmälerer Scheibenpartie versehen sein, so daß sie nur einen Teil der Ringpartie 16′ bildet.

Zur Halterung des Außenringes 20 besitzen die beiden seitlichen Ringpartien 16, 16′ an den axial einander zugewandten Innenflächen 50, 50′ jeweils eine umlaufende koaxiale Umfangsnut 51, in die der Außenring 20 mit seinen beiden axialen End- bzw. Randbereichen 52 eingreift. Die radial gemessene Nutbreite ist vorzugsweise etwas größer als die Dicke der Randbereiche 52, so daß sich eine flexible Aufhängung ergibt.

Wie aus Figur 5 ersichtlich, kann der Innenring 19 zur Reduzierung der radialen Gesamtabmessungen ovalen oder elliptischen Querschnitt besitzen, wobei die geometrische Hauptachse axial verläuft. Diese Gestalt kann sich auch bei einem Kreisquerschnitt besitzenden O-Ring einstellen, wenn er vom montierten Außenring 20 beaufschlagt wird.

Im übrigen gelten die Ausführungen zu den Dichtungen der Figuren 1 bis 4 für den Dichtring gemäß Figur 5 entsprechend.

## Patentansprüche

1. Ringförmige Dichtungsanordnung zur Abdichtung zwischen ineinander angeordneten, in axialer Richtung relativ zueinander bewegbaren Teilen (2, 9), vorzugsweise zur Abdichtung des Ventilkolbens (9) gegenüber dem Ventilgehäuse (2) bei Mehrwegeventilen, mit einem Dichtungsgehäuse (14), das aus mehreren in axialer Richtung zusammengesetzten Ringteilen (31, 32) besteht, die eine Ringvertiefung (15) begrenzen, in der in zueinander konzentrischer Anordnung ein elastisch nachgiebiger Innenring (19) und ein diesem im Bereich der radial orientierten Vertiefungsöffnung (18) vorgelagerter Außenring (20) gehalten ist, wobei im entfernten Zustand eines der Ringteile (32) am verbleibenden Abschnitt des Dichtungsgehäuses (14) eine das axiale Einsetzen von Innen- und Außenring (19, 20) ermöglichende, axial orientierte Einsetzöffnung vorhanden ist, und wobei das Dichtungsgehäuse (14) am einen der abzudichtenden Teile (2) derart festlegbar ist, daß der Außenring (20) als mit dem anderen Teil (9) zusammenarbeitendes Dichtelement wirkt, dadurch gekennzeichnet, daß das aus den Ringteilen (31, 32) zusammengesetzte Dichtungsgehäuse (14) einen im wesentlichen U-förmigen Querschnitt aufweist, daß die Ringteile (31, 32) unter gegenseitiger axialer Überlappung ineinandergesteckt und unlösbar fest miteinander verbunden sind, so daß das Dichtungsgehäuse (14) mit dem Innen- und Außenring (19, 20) einen einheitlich handhabbaren Dichtungsring (13) bildet, und daß die der Vertiefungsöffnung (18) radial entgegengesetzte Außenfläche des Dichtungsgehäuses (14) als zur Preßsitzbefestigung an dem einen der abzudichtenden Teile (2) dienende dichtelementlose Preßsitzfläche ausgebildet ist.

2. Dichtungsanordnung nach Anspruch 1, dadurch gekennzeichnet, daß das Dichtungsgehäuse (14) aus zwei im Querschnitt jeweils L-förmigen Ringteilen (32, 33) zusammengesetzt ist, die sich mit ihren den axial gerichteten L-Schenkeln entsprechenden Ringpartien (34, 34′) axial überlappen.

3. Dichtungsanordnung nach Anspruch 1, dadurch gekennzeichnet, daß das Dichtungsgehäuse (14) ein im Querschnitt L-förmiges Ringteil (31) und ein als Ringscheibe (48) ausgebildetes Ringteil (32) aufweist, wobei die Ringscheibe (48) randseitig in der von dem einen L-Schenkel gebildeten Ringpartie (17) einsitzt.

4. Dichtungsanordnung nach einem der Ansprüche 1 bis 3, dadurch gekennzeichnet, daß an dem äußeren der ineinander eingesteckten Ringteile (31) ein umlaufender Radialvorsprung (49) vorgesehen ist, der die axiale Einstecktiefe des eingesteckten Ringteils (32) begrenzt.

5. Dichtungsanordnung nach einem der Ansprüche 1 bis 4, dadurch gekennzeichnet, daß die Ringteile (31, 32) durch ineinander Einpressen fest miteinander verbunden sind.

6. Dichtungsanordnung nach einem der Ansprüche 1 bis 5, dadurch gekennzeichnet, daß der Innenring (19) ein Gummiring ist.

7. Dichtungsanordnung nach einem der Ansprüche 1 bis 6, dadurch gekennzeichnet, daß der Außenring ein Kunststoffring insbesondere aus verschleißfestem Polymermaterial oder aus halbhartem Kunststoff wie Teflon ist.

8. Dichtungsanordnung nach einem der Ansprüche 1 bis 7, dadurch gekennzeichnet, daß der Innenring (19) und der Außenring (20) als voneinander separate Einzelringe ausgebildet sind.

9. Dichtungsanordnung nach einem der Ansprüche 1 bis 8, dadurch gekennzeichnet, daß der Außenring (20) auf seiner dem Innenring (19) abgewandten Radialseite von die Vertiefungsöffnung (18) flankierenden Randpartien des Dichtungsgehäuses (14) hintergriffen ist, wobei er zweckmäßigerweise mit seinen axialen Randbereichen in Umfangsnuten (51) einsitzt, die sich an den Innenflächen (50, 50′) der den U-Schenkeln des Dichtungsgehäuses (14) entsprechenden Ringpartien (16, 16′) befinden.

10. Dichtungsanordnung nach einem der Ansprüche 1 bis 9, dadurch gekennzeichnet, daß auf der dem Innenring (19) zugewandten Seite des Außenrings (20) am Dichtungsgehäuse (14) ein Radialbewegungsanschlag (28) für den Außenring (20) vorgesehen ist, der zum Beispiel von einer umlaufenden Schulter (29) an beiden die Vertiefungsöffnung (18) flankierenden Ringpartien (16, 16′) gebildet ist.

11. Dichtungsanordnung nach einem der Ansprüche 1 bis 10, dadurch gekennzeichnet, daß der Außenring (20) an der dem Innenring (19) entgegengesetzten Seite wenigstens einen umlaufenden rippenförmigen Radialvorsprung (21) aufweist, der zweckmäßigerweise axial mittig angeordnet ist.

12. Mit mehreren gemäß einem der Ansprüche 1 bis 11 ausgestalteten Dichtungsanordnungen ausgestattetes Mehrwegeventil, wobei das Mehrwegeventil ein Ventilgehäuse (2) aufweist, in dem sich eine längliche Kolbenaufnahme (3) befindet, die zur axial verschieblichen Aufnahme eines Ventilkolbens (9) vorgesehen ist, und in die am Umfang mehrere Ventilkanäle (5 - 8) einmünden, dadurch gekennzeichnet, daß die als einzelne Dichtungsringe (13) ausgebildeten Dichtungsanordnungen untereinander axial beabstandet mit ihrer Preßsitzfläche dichtelementlos im Preßsitz in der Kolbenaufnahme (3) des Ventilgehäuses (2) oder auf dem Ventilkolben (9) festgelegt sind.

13. Mehrwegeventil nach Anspruch 12, dadurch gekennzeichnet, daß die Kolbenaufnahme (3) zur Dichtungsringmontage von einer Axialseite her zugänglich ist und eine im wesentlichen zylindrische und eventuell abgestufte Gestalt besitzt.

14. Mehrwegeventil nach Anspruch 12 oder 13, dadurch gekennzeichnet, daß der Ventilkolben (9) als einstückiges hohles, im Rahmen einer spanlosen Bearbeitung konturiertes und am Außenumfang wenigstens eine umlaufende Vertiefung (10) aufweisendes hülsenförmiges Formteil ausgebildet ist.

15. Mehrwegeventil nach Anspruch 14, dadurch gekennzeichnet, daß der Kolbenhohlraum (37) einen Strömungskanal für Ventilfluid bildet und/oder zur zumindest teilweisen Aufnahme (42) einer Rückstellfeder dient.

## Claims

1. Annular seal assembly for sealing between parts (2, 9) arranged inside one another, axially moveable relative to one another, preferably for sealing the valve piston (9) relative to the valve housing (2) of multiway valves, with a seal housing (14) comprised of several ring elements (31, 32) axially assembled, which bound an annular recess (15), in which are held concentrically to one another an elastic, flexible inner ring (19) and an outer ring (20) mounted ahead of it in the area of the radially-aligned recess opening (18), wherein with one of the ring elements (32) removed, there is an axially-aligned insert opening on the remaining section of the seal housing (14), which facilitates the axial insertion of the inner and outer rings (19, 20), and wherein the seal housing (14) can be attached to one of the parts (2) to be sealed in such a way that the outer ring (20) acts as a sealing element operating in conjunction with the other part (9), characterized in that the seal housing (14) comprised of the ring elements (31, 32) has an essentially U-shaped cross-section, that the ring elements (31, 32) are inserted into one another with mutual axial overlapping and are permanently fixed together, so that the seal housing (14) with the inner and outer rings (19, 20) forms a uniform, manageable seal ring (13), and that the outer face of the seal housing (14) radially opposite the recess opening (18) is designed as an interference fit face without sealing element, serving for interference fit fastening to one of the parts (2) to be sealed.

2. Seal assembly according to claim 1, characterized in that the seal housing (14) is comprised of two ring elements (32, 33), each L-shaped in cross-section, with ring sections (34, 34′) corresponding to the axially-aligned L-legs overlapping axially.

3. Seal assembly according to claim 1, characterized in that the seal housing (14) has a ring element (31) with L-shaped cross-section and a ring element (32) in the form of an annular disc (48), wherein the edge of the annular disc (48) fits into the ring section (17) formed by one L-leg.

4. Seal assembly according to any of claims 1 to 3, characterized in that an all-round radial projection (49), which bounds the axial insert depth of the inserted ring element (32) , is provided on the outer of the ring elements (31) inserted into one another.

5. Seal assembly according to any of claims 1 to 4, characterized in that the ring elements (31, 32) are joined securely together by pressing into one another.

6. Seal assembly according to any of claims 1 to 5, characterized in that the inner ring (19) is a rubber ring.

7. Seal assembly according to any of claims 1 to 6, characterized in that the outer ring is a plastic ring, in particular of wear-resistant polymer material or of semi-rigid plastic such as Teflon.

8. Seal assembly according to any of claims 1 to 7, characterized in that the inner ring (19) and the outer ring (20) are designed as individual rings separate from one another.

9. Seal assembly according to any of claims 1 to 8, characterized in that the outer ring (20) is engaged from the rear on its radial side facing away from the inner ring (19) by the edge sections of the seal housing (14) flanking the recess opening (18), wherein it expediently fits with its axial edge areas into peripheral grooves (51), located on the inner faces (50, 50′) of the ring sections (16, 16′) corresponding to the U-arms of the seal housing (14).

10. Seal assembly according to any of claims 1 to 9, characterized in that, on that side of the outer ring (20) facing the inner ring (19) is provided on the seal housing (14) a radial movement stop (28) for the outer ring (20), formed for example by an all-round shoulder (29) on the two ring sections (16, 16′) flanking the recess opening (18).

11. Seal assembly according to any of claims 1 to 10, characterized in that, on that side opposite the inner ring (19), the outer ring (20) has at least one all-round rib-shaped radial projection (21), expediently located axially in the centre.

12. Multiway valve equipped with several seal assemblies according to any of claims 1 to 11, wherein the multiway valve has a valve housing (21), in which is located an elongated piston mounting (3), provided for axially slideable mounting of a valve piston (9), and into the periphery of which run several valve passages (5 - 8), characterized in that the seal assemblies in the form of individual seal rings (13) are located, spaced axially apart, with their interference fit face without sealing element in the interference fit in the piston mounting (3) of the valve housing (2) or on the valve piston (9).

13. Multiway valve according to claim 12, characterized in that the piston mounting (3) is accessible from one axial side to install the seal rings and has an essentially cylindrical and possibly stepped shape.

14. Multiway valve according to claim 12 or 13, characterized in that the valve piston (9) is designed as a single-piece, hollow, sleeve-shaped moulding, contoured by shaping without cutting, and having at least one all-round recess (10) on its outer periphery.

15. Multiway valve according to claim 14, characterized in that the piston cavity (37) forms a flow channel for valve fluid and/or serves for at least partial location (42) of a return spring.

## Revendications

1. Dispositif d'étanchéité annulaire pour l'étanchéification entre des pièces (2, 9) disposées l'une dans l'autre et mobiles l'une par rapport à l'autre dans le sens axial, de préférence pour l'étanchéification du piston à soupape (9) vis-à-vis de la cape de soupape (2) pour des soupapes à plusieurs voies, avec un boîtier d'étanchéité (14) composé de plusieurs parties d'anneau (31, 32) assemblées dans le sens axial, qui délimitent un évidement annulaire (15) dans lequel un anneau intérieur (19) souple de façon élastique et un anneau extérieur (20) situé en amont de celui-ci dans la zone de l'ouverture de l'évidement (18) orientée dans le sens radial sont maintenus dans une disposition concentrique l'un de l'autre, une ouverture d'introduction orientée dans le sens axial et permettant l'introduction axiale de l'anneau intérieur et de l'anneau extérieur (19, 20) existant dans la section restante du boîtier d'étanchéité (14) lorsque l'une des parties d'anneau (32) est enlevée, et le boîtier d'étanchéité (14) pouvant être fixé sur l'une des pièces (2) à étanchéifier de telle sorte que l'anneau extérieur (20) agisse comme un élément d'étanchéité coopérant avec l'autre pièce (9), caractérisé en ce que le boîtier d'étanchéité (14) composé des parties d'anneau (31, 32) présente une section sensiblement en forme de U, en ce que les parties d'anneau (31, 32) sont introduites l'une dans l'autre avec un chevauchement axial mutuel et reliées entre elles de manière inamovible, de sorte que le boîtier d'étanchéité (14) forme avec les anneaux intérieur et extérieur (19, 20) un anneau de garniture (13) pouvant être manipulé d'un seul tenant, et en ce que la surface extérieure du boîtier d'étanchéité (14) opposée dans le sens radial à l'ouverture de l'évidement (18) est conçue comme une surface d'ajustage serré sans élément d'étanchéité servant à la fixation par ajustage serré sur l'une des pièces (2) à isoler.

2. Dispositif d'étanchéité selon la revendication 1, caractérisé en ce que le boîtier d'étanchéité (14) est composé de deux parties d'anneau (32, 33) de section en forme de L, qui se chevauchent dans le sens axial avec leurs parties d'anneau (34, 34′) correspondant aux branches du L orientées dans le sens axial.

3. Dispositif d'étanchéité selon la revendication 1, caractérisé en ce que le boîtier d'étanchéité (14) présente une partie d'anneau (31) de section en forme de L et une partie d'anneau (32) conçue comme une rondelle annulaire (48), la rondelle annulaire (48) étant introduite du côté du bord dans la partie d'anneau (17) formée par une branche du L.

4. Dispositif d'étanchéité selon l'une quelconque des revendications 1 à 3, caractérisé en ce qu'une saillie radiale (49) périphérique limitant la profondeur d'enfoncement axiale de la partie d'anneau (32) enfoncée est prévue sur celle des parties d'anneau (31) introduites l'une dans l'autre qui se situe à l'extérieur.

5. Dispositif d'étanchéité selon l'une quelconque des revendications 1 à 4, caractérisé en ce que les parties d'anneau (31, 32) sont fixées l'une à l'autre par enfoncement de l'une dans l'autre.

6. Dispositif d'étanchéité selon l'une quelconque des revendications 1 à 5, caractérisé en ce que l'anneau intérieur (19) est un anneau de caoutchouc.

7. Dispositif d'étanchéité selon l'une quelconque des revendications 1 à 6, caractérisé en ce que l'anneau extérieur est un anneau en matière synthétique, en particulier fait d'un matériau polymère résistant à l'usure ou d'une matière synthétique mi-dure comme le téflon.

8. Dispositif d'étanchéité selon l'une quelconque des revendications 1 à 7, caractérisé en ce que l'anneau intérieur (19) et l'anneau extérieur (20) sont conçus comme des anneaux distincts.

9. Dispositif d'étanchéité selon l'une quelconque des revendications 1 à 8, caractérisé en ce que l'anneau extérieur (20) est saisi par derrière sur son côté radial opposé à l'anneau intérieur (19) par les parties de bord du boîtier d'étanchéité (14) qui entourent l'ouverture de l'évidement (18), en reposant de façon avantageuse par ses sections de bord axiales dans des rainures périphériques (51), qui se trouvent sur les surfaces intérieures (50, 50') des parties d'anneau (16, 16') correspondant aux branches de U du boîtier d'étanchéité (14).

10. Dispositif d'étanchéité selon l'une quelconque des revendications 1 à 9, caractérisé en ce qu'il est prévu sur le boîtier d'étanchéité (14) sur le côté de l'anneau extérieur (20) orienté vers l'anneau intérieur (19) une butée pour un déplacement radial (28) pour l'anneau extérieur (20), qui est formée par exemple par un épaulement (29) périphérique sur les deux parties d'anneau (16, 16′) qui entourent l'ouverture de l'évidement (18).

11. Dispositif d'étanchéité selon l'une quelconque des revendications 1 à 10, caractérisé en ce que l'anneau extérieur (20) présente sur le côté opposé à l'anneau intérieur (19) au moins une saillie radiale (21) périphérique en forme de nervure, qui est disposée de manière appropriée au centre dans le sens axial.

12. Soupape à plusieurs voies équipée de plusieurs dispositifs d'étanchéité selon l'une quelconque des revendications 1 à 11, la soupape à plusieurs voies présentant une cage de soupape (2) dans laquelle se trouve un logement de piston (3) oblong, qui est prévu pour le logement mobile dans le sens axial d'un piston à soupape (9), et dans lequel plusieurs canaux de soupape (5 - 8) débouchent sur sa périphérie, caractérisée en ce que les dispositifs d'étanchéité conçus comme des anneaux d'étanchéité (13) distincts sont fixés à distance les uns des autres dans le sens axial par leur surface d'ajustage serré sans élément d'étanchéité par un ajustage serré dans le logement de piston (3) de la cage de soupape (2) ou sur le piston à soupape (9).

13. Soupape à plusieurs voies selon la revendication 12, caractérisée en ce que le logement de piston (3) est accessible à partir d'un côté axial pour le montage des anneaux d'étanchéité et possède une forme sensiblement cylindrique et éventuellement en gradins.

14. Soupape à plusieurs voies selon la revendication 12 ou 13, caractérisée en ce que le piston à soupape (9) est conçu comme une pièce moulée en forme de manchon, creuse d'un seul tenant et profilée dans le cadre d'un traitement sans enlèvement de copeaux, qui présente sur la périphérie extérieure au moins un évidement (10) périphérique.

15. Soupape à plusieurs voies selon la revendication 14, caractérisée en ce que l'espace creux du piston (37) forme un canal d'écoulement pour du fluide de soupape et/ou sert au logement (42) au moins partiel d'un ressort de rappel.
